(19) Europäisches Patentamt
European Patent Office
Office européen des brevets

(11) **EP 1 421 296 B1**

(12) **EUROPÄISCHE PATENTSCHRIFT**

(45) Veröffentlichungstag und Bekanntmachung des Hinweises auf die Patenterteilung:
**12.07.2006 Patentblatt 2006/28**

(21) Anmeldenummer: **02774527.2**

(22) Anmeldetag: **21.08.2002**

(51) Int Cl.:
**F16F 15/173** (2006.01)

(86) Internationale Anmeldenummer:
**PCT/EP2002/009336**

(87) Internationale Veröffentlichungsnummer:
**WO 2003/019038 (06.03.2003 Gazette 2003/10)**

(54) **DREHSCHWINGUNGSDÄMPFER**

TORSIONAL VIBRATION DAMPER

AMORTISSEUR DE VIBRATIONS TORSIONNELLES

(84) Benannte Vertragsstaaten:
**AT BE BG CH CY CZ DE DK EE ES FI FR GB GR IE IT LI LU MC NL PT SE SK TR**

(30) Priorität: **22.08.2001 DE 10140178**

(43) Veröffentlichungstag der Anmeldung:
**26.05.2004 Patentblatt 2004/22**

(73) Patentinhaber: **Hasse & Wrede GmbH**
**12681 Berlin (DE)**

(72) Erfinder: **KIENER, Wolfgang**
**10247 Berlin (DE)**

(74) Vertreter: **Mattusch, Gundula et al**
**Knorr-Bremse AG,**
**Patentabteilung,**
**Moosacher Strasse 80**
**80809 München (DE)**

(56) Entgegenhaltungen:
**US-A- 2 824 467**

- **PATENT ABSTRACTS OF JAPAN vol. 1998, no. 06, 30. April 1998 (1998-04-30) & JP 10 054444 A (KOMATSU LTD), 24. Februar 1998 (1998-02-24)**
- **PATENT ABSTRACTS OF JAPAN vol. 007, no. 126 (M-219), 31. Mai 1983 (1983-05-31) & JP 58 042844 A (SHIYOUICHI IWAMOTO), 12. März 1983 (1983-03-12)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 421 296 B1

**Beschreibung**

Die Erfindung betrifft einen Drehschwingungsdämpfer mit einem drehsteif mit einer Maschinenwelle, insbesondere einer Motorwelle, an einer ihrer Enden verbundenen Gehäuse, das eine ringförmige Arbeitskammer umschließt, mit einem in der Arbeitskammer relativ zum Gehäuse drehbar angeordneten und geführten Schwungring und mit einem Spalt zwischen dem Gehäuse und dem Schwungring, der mit einem viskosen Dämpfungsmittel gefüllt ist, wobei die axiale Länge L der Halbschnittfläche des Schwungringes (2) zumindest in einem Teilbereich der Halbschnittfläche nach radial außen zunimmt. Ein solcher Drehschwingungsdämpfer ist im japanischen Abstrakt "PATENT ABSTRACTS OF JAPAN vol. 1998, no. 06. 30. April 1998 (1998-04-30) & JP 10054444 A (KOMATSU LTD), 24. Februar 1998 (1998-02-24)" offenbart.

Drehschwingungsdämpfer, die auch als Viscodämpfer oder Scherspalt-Tilger bezeichnet werden, finden vorwiegend bei Verbrennungsmotoren Anwendung und werden zumeist an der Kraftgegenseite der Motorkurbelwelle von derartigen Verbrennungsmotoren angeflanscht. Daher wird der erfindungsgemäße Drehschwingungsdämpfer nachstehend anhand des Einsatzes bei Verbrennungsmotor-Kurbelwellen erläutert, obgleich der erfindungsgemäße Drehschwingungsdämpfer auch bei anderen Maschinenwellen zum Einsatz gebracht werden kann.

Dank der oszillierenden Scherung des Dämpfungsmediums, bei dem es sich normalerweise um Siliconöl handelt, im Inneren des Drehschwingungsdämpfers wird Schwingenergie in Wärme umgewandelt, die durch Konvektion an die umgebende Luft oder ein anderes Kühlmedium abgegeben wird.

Drehschwingungsdämpfer der hier in Rede stehenden Art besitzen üblicherweise ein ringförmiges Gehäuse, das einen Schwungring umschließt, der eine Sekundärmasse darstellt. Das Gehäuse wird dabei drehsteif mit der Kurbelwelle verbunden.

Das Gehäuse des Drehschwingungsdämpfers und der Schwungring folgen der mittleren Drehgeschwindigkeit der Kurbelwelle ohne Schlupf. Ihre Drehschwingungen hingegen, die sich der gleichmäßigen Drehung überlagern, teilen sich zunächst nur dem Gehäuse mit. Der Schwungring würde gleichförmig rotieren, wenn ihn nicht das Dämpfungsmedium, das den engen Scherspalt ausfüllt, an das Gehäuse ankoppeln würde. Diese Kopplung ist elastisch und dämpfungsbehaftet.

Drehschwingungsdämpfer gemäß den Merkmalen des Oberbegriffs des Anspruches 1 sind nun bereits bekannt, beispielsweise aus der EP-A 745 784 und der GB-A 638 755. Die Schwungringe dieser bekannten Drehschwingungsdämpfer sind üblicherweise Kreisringe und besitzen einen in etwa rechteckigen Halbschnitt. Der Halbschnitt bezeichnet dabei einen solchen Querschnitt in einer solchen Ebene, in der auch die Achse der Kurbelwelle liegt. Zudem bezeichnet der Halbschnitt den Querschnitt des Körpers des Schwungringes: Mit anderen Worten, ein Längsschnitt durch einen Schwungring in einer die Achse umfassenden Ebene zeigt zwei Halbschnitte des Schwungringes.

Aus der genannten GB-A 638 755 ist auch schon ein Schwungring bekannt, der einen Halbschnitt aufweist, der keine rechteckige Form besitzt. Die axiale Länge dieses bekannten Schwungsringes nimmt dabei ab einem gewissen Abstand von der Achse nach radial außen ab, so dass sich der Schwungring nach axial außen verjüngt, bezogen auf die Halbschnittfläche.

Aufgrund der technologischen Entwicklungen insbesondere auf dem Automobilsektor werden immer mehr Motoren zum Einsatz gebracht, bei denen der Einsatz eines Drehschwingungsdämpfers angezeigt ist. Gleichzeitig steht jedoch für diese Motoren kein größerer Bauraum zur Verfügung. Vielmehr besteht die Tendenz, immer größere und stärkere Motoren in immer kleinere Kraftwagen einzubauen.

Aufgabe der Erfindung ist es daher, einen Drehschwingungsdämpfer bereitzustellen, der nicht nur eine wirksame Dämpfung gewährleistet, sondern auch zu keiner oder allenfalls nur zu einer geringen Vergrößerung des erforderlichen Bauraumes führt.

Gelöst wird diese Aufgabe durch einen Drehschwingungsdämpfer nach den Merkmalen des Anspruches 1. Vorteilhafte Ausführungsformen der Erfindung ergeben sich aus den Merkmalen der Ansprüche 2 bis 14.

Bei den bekannten Drehschwingungsdämpfern besitzt der Schwungring - wie bereits dargestellt - entweder eine rechteckige Halbschnittfläche oder eine sich nach radial außen verjüngende Halbschnittfläche. Auf den Flächenschwerpunkt und damit auf den Massenschwerpunkt bezogen, bedeutet dies, dass dieser Flächenschwerpunkt bzw. der Massenschwerpunkt verhältnismäßig nahe an der Rotationsachse liegen. Der im Rahmen der Erfindung verwendete Begriff Massenschwerpunkt bezieht sich dabei nicht auf den gesamten Schwungring, denn dessen Massenschwerpunkt würde wegen der Rotationssymmetrie des Schwungringes in der Drehachse liegen. Vielmehr bezieht sich dieser Begriff auf die Halbschnittfläche.

Dadurch, dass die axiale Länge L der Halbschnittfläche des erfindungsgemäßen Schwungringes zumindest in einem Teilbereich der Halbschnittfläche nach radial außen zunimmt, werden der Flächenschwerpunkt der Halbschnittfläche und damit auch der Massenschwerpunkt nach radial außen verlegt. Dies führt bei gleichbleibender Masse des Schwungrings zu einem höheren Trägheitsmoment des Schwungrings, was eine erhöhte Wirksamkeit des Drehschwingungsdämpfers zur Folge hat.

Der Flächenschwerpunkt liegt damit radial weiter außen verglichen mit dem Flächenschwerpunkt eines Schwungringes mit rechteckiger Halbschnittfläche und gleicher axialer Länge L und gleichem Außenradius $r_{außen}$ und gleichem Innenradius $r_{innen}$.

Bei einem erfindungsgemäßen Drehschwin-

gungsdämpfer, der die gleiche Länge L an der radial innenliegenden Seite der Halbschnittfläche, den gleichen Radius $r_i$ und auch den gleichen Radius $r_a$ besitzt, liegt nun der Flächenschwerpunkt radial weiter außen. Mit anderen Worten, der Radius $r_{s2}$ ist größer als der Radius $r_{s1}$ eines Schwungringes mit rechteckiger Halbschnittfläche.

Dies wird - vereinfacht ausgedrückt - dadurch erreicht, dass sich die Halbschnittfläche des Schwungringes nach radial außen verbreitert bzw. die axiale Länge L des Schwungsringes nach radial außen hin zunimmt. Dadurch wandert auch der Massenschwerpunkt der Halbschnittfläche weiter nach radial außen.

Eine der axialen Stirnflächen des Schwungringes verläuft in etwa achsnormal zur Rotationsachse der Maschinenwelle. Der Begriff "achsnormal" bezeichnet dabei diejenige Ebene, zu der die Symmetrieachse die Normale bildet. Vorzugsweise handelt es sich bei der achsnormal verlaufenden Stirnfläche um die axial außen liegende Stirnfläche.

Verläuft die axial außen liegende Stirnfläche beispielsweise achsnormal und verlaufen die radial außen und radial innen liegenden Flächen bzw. Zylindermäntel des Schwungringes achsparallel, dann kann die axial innenliegende Stirnfläche des Schwungsringes zumindest bereichsweise von radial innen nach radial außen einen Winkel $\alpha > 0°$ mit der Achsnormalen einschließen. Mit dem Begriff "Achsnormale" wird dabei diejenige Ebene bezeichnet, die senkrecht zur Achse der Welle verläuft und bezüglich derer diese Achse die Normale darstellt.

Bei diesen Betrachtungen sollte berücksichtigt werden, dass es sich bei dem Schwungring und bei der Arbeitskammer bzw. dem Gehäuse im wesentlichen um rotationssymmetrische Körper handelt. Zudem werden alle gerundeten und gebrochenen Kanten und unerheblichen Eindrehungen fortgelassen.

Nach einer weiterhin bevorzugten Ausführungsform stellt die axial innen liegende Stirnfläche eine Kegelmantelfläche dar, die den genannten Winkel $\alpha$ mit der Achsnormalen einschließt. Die axial außenliegende Stirnfläche verläuft dann vorzugsweise senkrecht zur Achse, während die radial innen und außen liegenden Zylinderflächen koaxial verlaufen. Die entsprechende Halbschnittfläche wird im Rahmen der vorliegenden Unterlagen als trapezförmig bezeichnet. Die Größe des Winkels $\alpha$ hängt natürlich von den räumlichen Gegebenheiten ab. Je größer dieser Winkels $\alpha$ ist, desto größer wird auch die Wirksamkeit des Drehschwingungsdämpfers. Mit anderen Worten, es sollte versucht werden, bei einem gegebenen Bauraum die axiale Länge L, die für den Schwungring zur Verfügung steht, weitestmöglich auszunutzen, und zwar möglichst auf einem großen Radius. Bei der axial innen liegenden bzw. wangenseitigen Stirnfläche des Schwungringes muss es sich somit nicht um eine Kegelmantelfläche handeln. Vielmehr kann der Winkel $\alpha$ im radialen Verlauf von radial innen nach radial außen zu- oder abnehmen, um den zur Verfügung stehenden Bauraum und somit die Breite L weitestmöglich auszunutzen. Die Kontur der Seitenlinie der axial innen liegenden Stirnfläche (und somit in Seitenansicht betrachtet) kann somit durchaus kurvig bzw. geschwungen verlaufen. Vorzugsweise nimmt die axiale Länge L der Halbschnittfläche des Schwungringes stetig nach radial außen hin zu.

Hierbei kann es durchaus im Sinne einer kompakten Bauweise sein, dass die Weite des Scherspalts jeweils zwischen dem Gehäuse und den axialen Stirnflächen des Schwungringes konstant ist. Das Gehäuse schmiegt sich somit den Stirnflächen des Schwungrades an. Für eine optimale Belastung des Scherspaltes ist es in der Regel von Vorteil, wenn die Weite des Scherspalts im Bereich zunehmender axialer Länge L der Halbschnittfläche im wesentlichen konstant ist. Unter besonderen Einsatzbedingungen kann es jedoch auch von Vorteil sein, die Weite des Scherspalts mit zunehmenden Radius zu vergrößern, was die thermische Belastung des Dämpfungsmittels reduziert.

Nach einer bevorzugten Ausführungsform stellt das Gehäuse, welches die ringförmige Arbeitskammer umschließt, zumindest teilweise kein separates Gebilde dar. Vielmehr ist die Arbeitskammer vorzugsweise zumindest teilweise in einer axial endständigen Kurbelwange und dem dazugehörigen Gegengewicht einer Kurbelwelle ausgebildet. So können beispielsweise die Kurbelwange und das dazu gehörende Gegengewicht zur Aufnahme einer integrierten Schwingungsdämpfer-Arbeitskammer ausgestaltet sein, wobei die so gebildete Arbeitskammer durch einen separaten Deckel verschlossen wird.

Integriert in die Kurbelwange und in das dazugehörige Gegengewicht einer Kurbelwelle, wobei zumindest ein Teil des Gehäuses und der Arbeitskammer von der Kurbelwange und dem Gegengewicht gebildet wird, ergibt sich eine äußerst kompakte, Einbauraum sparende Bauweise einer mit einem Drehschwingungsdämpfer bestückten Kurbelwelle.

Die Erfindung wird im folgenden anhand der beigefügten Zeichnung erläutert. Es zeigt:

Figur 1    in axonometrischer Ansicht einen Drehschwingungsdämpfer nach dem Stand der Technik,

Figur 2    einen Querschnitt durch einen Drehschwingungsdämpfer nach dem Stand der Technik, dessen Gehäuse an eine Kurbelwelle angeschraubt ist,

Figur 3    einen Querschnitt durch einen erfindungsgemäßen Drehschwingungsdämpfer, dessen Gehäuse an eine Kurbelwelle angeschraubt ist,

Figur 4    einen Querschnitt einer weiteren Ausführungsform des erfindungsgemäßen Drehschwingungsdämpfers mit geschrumpftem Gehäuse,

Figur 5    einen Querschnitt durch einen weiteren erfindungsgemäßen Drehschwingungsdämpfer mit integriertem Gehäuse,

Figur 6 einen Halbschnitt in vereinfachter Darstellung durch einen kreisringförmigen Schwungring nach dem Stand der Technik,

Figur 7 einen Halbschnitt in vereinfachter Darstellung durch den in der Fig. 3 gezeigten Schwungring,

Figur 8 einen Halbschnitt mit vereinfachter Darstellung durch einen beliebig konturierten Schwungring und

Figur 9 einen Halbschnitt durch den in der Fig. 7 gezeigten Schwungring mit einer Fase und

Figur 10 einen Querschnitt durch einen Drehschwingungsdämpfer mit konischem Innenumfang.

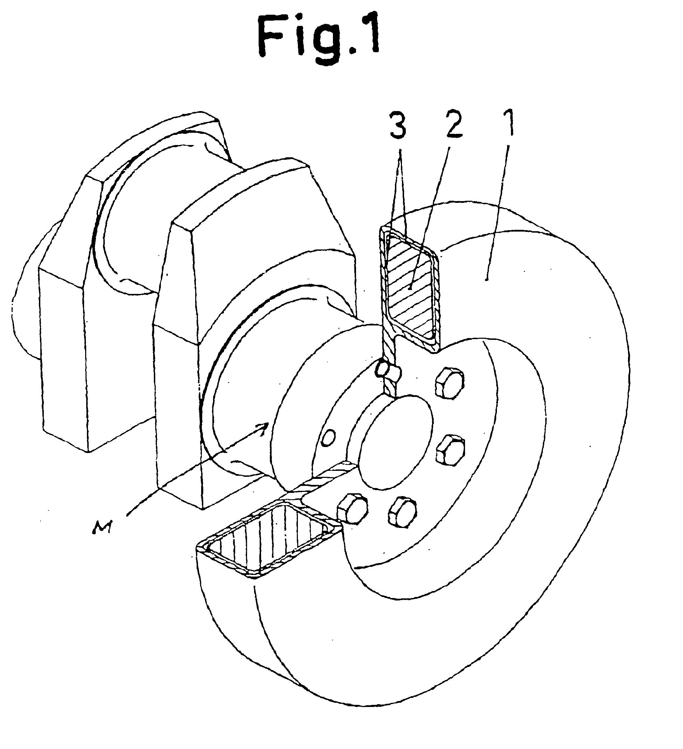

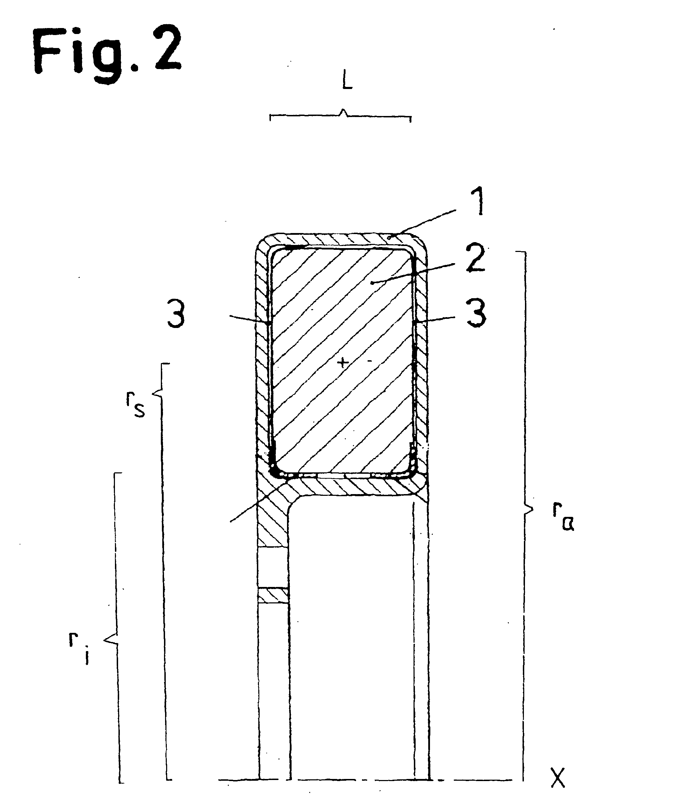

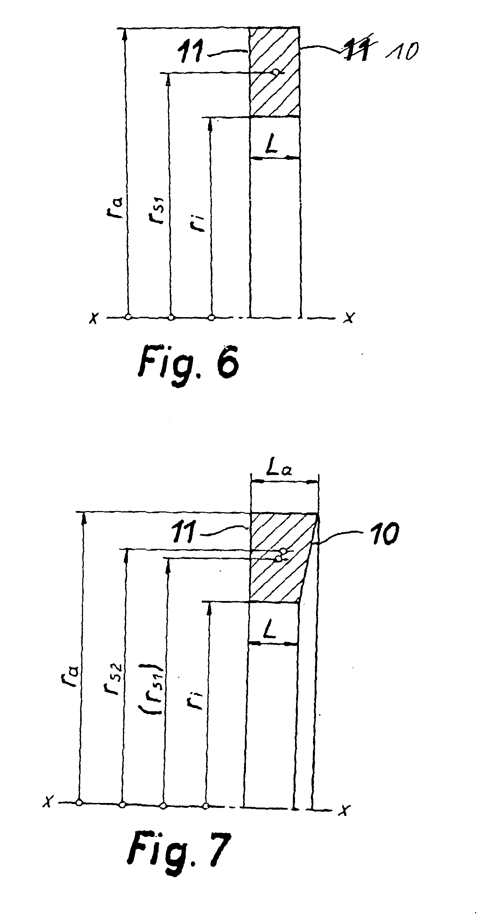

Die Figuren 1 und 2 zeigen Drehschwingungsdämpfer nach dem Stand der Technik. Der in der Fig. 1 in axonometrischer Ansicht sowie geschnittene Drehschwingungsdämpfer ist in der eingangs genannten EP 0 745 784 B1 näher erläutert und besteht aus einem ringförmigen Gehäuse 1, das einen Schwungring 2 genannte Sekundärmasse umschließt. Das Gehäuse 1 wird drehsteif mit der Kurbelwelle M verbunden. Der Halbschnitt dieses bekannten Drehschwingungsdämpfers ist in Fig. 6 gezeigt. Die axiale Länge L des Schwungringes 2 auf "Höhe" des Innenradius $r_{innen}$ (d.h.: $r_i$) entspricht dabei der axialen Länge auf "Höhe" des Außenradius $r_{aussen}$ (d.h.: $r_a$); man könnte sie auch als Breite des Schwungringes 2 bezeichnen. Die beiden Stirnflächen 10 und 11 verlaufen achsnormal. Die Halbschnittfläche ist somit im wesentlichen rechteckig. Der Flächenschwerpunkt dieser rechteckigen Halbschnittfläche hat dabei einen Radius $r_{Schwerpunkt}$ (d.h.: $r_{s1}$).

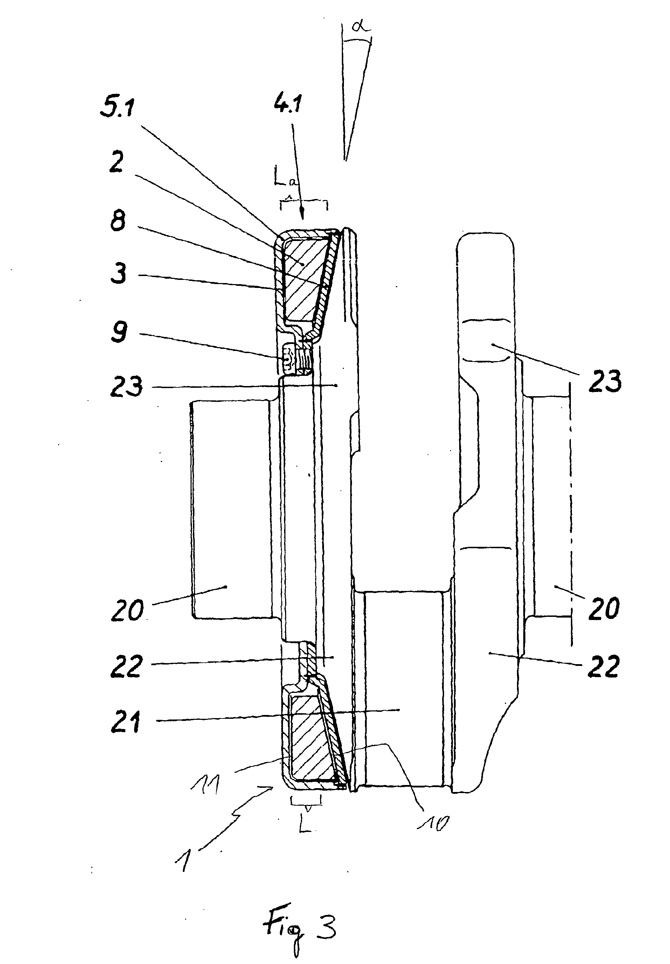

In der Fig. 3 ist ein erfindungsgemäßer Drehschwingungsdämpfer im Querschnitt gezeigt, der an die Kraftgegenseite einer Motorkurbelwelle mit ihren Hauptbestandteilen Grundlagerzapfen 20, Hub- oder Kurbelzapfen 21, Kurbelwangen 22 und Gegengewichten 23 befestigt ist. Der Drehschwingungsdämpfer 4.1 ist dabei an der auswärts weisenden Kurbelwange 22 zentriert und angeschraubt. Das Gehäuse 1 für den Schwungring 2 des Drehschwingungsdämpfers besteht hier aus zwei ringförmigen Gehäuseschalen 5.1, 8, wobei die Gehäuseschale als konusförmige Deckelschale 8 ausgebildet ist, die das Gehäuse 1 verschließt. Die erste Gehäuseschale 5.1 liegt dabei einer axial äußeren Stirnfläche 11 und die Deckelschale 8 der axial inneren Stirnfläche 10 gegenüber. Die Deckelschale 8 folgt dem Verlauf der axial inneren Stirnfläche 10. Gehäuseschale 5.1 und Deckelschale 8 sind durch Strahlschweißung oder ein anderes geeignetes Verfahren fluiddicht miteinander verbunden.

Das Gehäuse 1 umschließt die Arbeitskammer, in die der Schwungring 2 mit engen Spielen gleitend eingepasst ist. Am Außenumfang und somit radial außen weist der Schwungsring 2 eine größere axiale Länge $L_a$ auf als am inneren Radius und somit radial innen. Die Scherspalte 3 zwischen dem Schwungring 2 und den Wänden der Arbeitskammer sind mit einem hochviskosen Siliconöl als Dämpfungsmittel gefüllt. Für die Verbindung von dem Drehschwingungsdämpfer und der Kurbelwelle sorgen Befestigungsschrauben 9, von denen nur eine dargestellt ist.

Der in der Fig. 3 und Fig. 7 gezeigte Schwungring hat radial innen bzw. am inneren Radius die axiale Länge L. Radial außen bzw. am Außenradius hat der in der Fig. 7 gezeigte Schwungring eine axiale Länge $L_a$, die größer ist als die Länge L. Die axial außen liegende Stirnfläche 10 verläuft senkrecht zur Achse und stellt eine Planfläche dar. Die axial innen liegende Stirnfläche 10 des Schwungringes 2 stellt eine Kegelmantelfläche dar, die einen Winkel $\alpha$ mit der Achsnormalen einschließt. Die Halbschnittfläche des Schwungringes 2 ist somit trapezförmig. Der Flächenschwerpunkt ist nach radial außen verlagert, verglichen mit dem Schwungring von Fig. 6 mit der gleichen axialen Länge L und mit rechteckiger Halbschnittfläche. Das oben Gesagte gilt sinngemäß auch für das Gehäuse 1 aus der Gehäuseschale 5.1 und der Deckelschale 8, deren Wandstärken in etwa überall gleich sind.

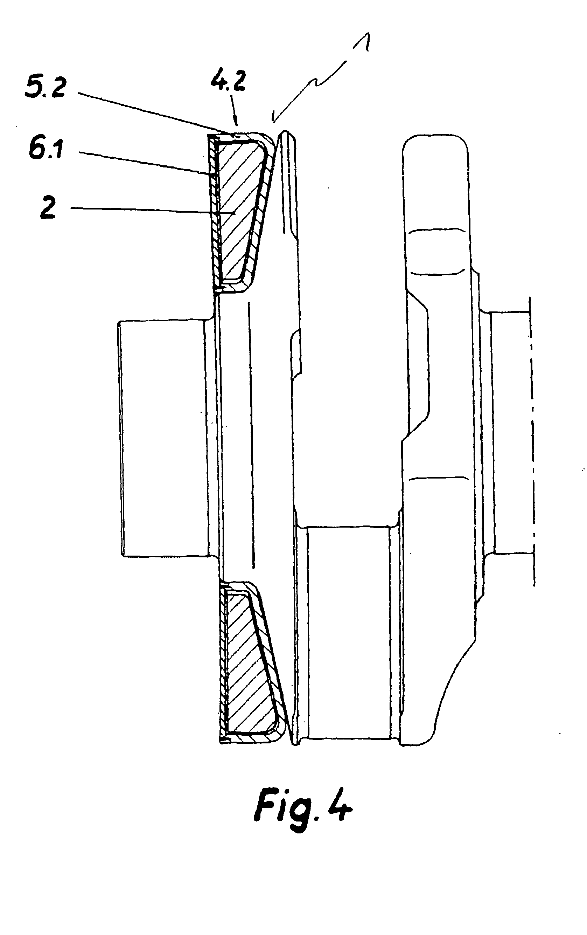

Der in der Fig. 4 gezeigte Drehschwingungsdämpfer entspricht in wesentlichen Teilen dem Drehschwingungsdämpfer gemäß der Fig. 3. Die Kurbelwelle ist dabei die gleiche wie bei der Fig. 3, jedoch besteht das Gehäuse 1 aus einer Gehäuseschale 5.2 und einem Deckel 6.1. Der gezeigte Schwingungsdämpfer 4.2 ist kraftschlüssig, beispielsweise durch Aufschrumpfen oder ein anderes geeignetes Verfahren, mit der Kurbelwelle verbunden. Dank der entfallenen Schrauben 9 gemäß der in der Fig. 3 gezeigten Ausführungsform erhält der Schwungring 2 einen kleineren Innenradius und gewinnt demzufolge ein wenig an Massenträgheitsmoment.

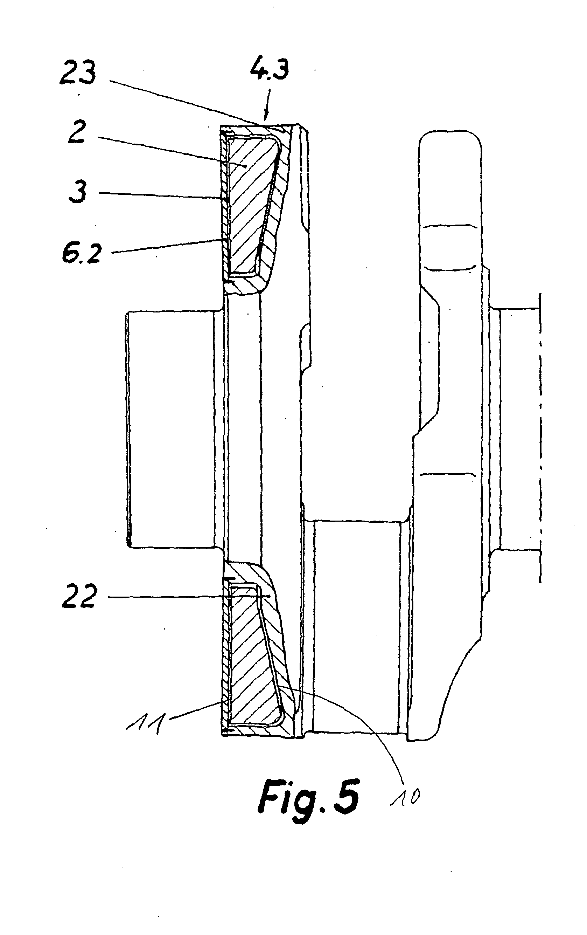

Bei dem in der Fig. 5 gezeigten Drehschwingungsdämpfer 4.3 ist die Arbeitskammer in der axial endständigen, an der Kraftgegenseite einer Motorkurbelwelle angeordneten Kurbelwange 22 und dem dazugehörigen Gegengewicht 23 zur Aufnahme des Schwungringes 2 ausgestaltet. Der Deckel 6.2 verschließt diese Kammer nach erfolgter Montage mittels eines Strahlschweißverfahrens. In der Arbeitskammer ist der Schwungring 2 wie oben gleitend gelagert, und die Scherspalte 3 sind mit dem hochviskosen Siliconöl gefüllt. Auch in diesem Falle ist die axiale Länge L des Schwungringes 2 (man könnte dies auch als Breite des Schwungringes 2 bezeichnen) am Außenradius größer als am Innenradius.

Zudem verläuft die axial innen liegende Stirnfläche 10 des in der Fig. 5 gezeigten Schwungringes beginnend von radial innen eine gewisse Strecke nach radial außen parallel zur axial außen liegenden Stirnfläche 11. Radial innen besitzt der dort gezeigte Schwungring somit eine rechteckige Halbschnittfläche bzw. rechteckige Form. Erst danach bildet die axial innen liegende Stirnfläche 10 einen Winkel mit der Achsnormalen.

In der Fig. 6 ist der schematisierte Halbschnitt durch einen herkömmlichen Schwungring nach dem Stand der Technik mit zwei planen Stirnflächen 10, 11 gezeigt; alle gerundeten und gebrochenen Kanten und unerheblichen Eindrehungen sind fortgelassen. Der Halbschnitt erscheint als Rechteck. Der Flächenschwerpunkt dieses Rechtecks liegt

$$r_{S1} = \tfrac{1}{2}\,(r_a + r_i) = \tfrac{1}{4}\,(d_a + d_i)$$

von der Rotationsachse X - X entfernt.

In der Fig. 7 ist der Halbschnitt des in der Fig. 3 gezeigten Schwungringes dargestellt, jedoch unter schematisierender Auslassung der Rundungsradien. Der Flächenschwerpunkt der hier trapezförmigen Halbschnittfläche liegt bei den skizzierten Proportionen um 1,4 % weiter von der Drehachse X - X entfernt als bei der in der Fig. 6 gezeigten Ausführungsform nach dem Stand der Technik. Für die Erfindung ist somit die Ungleichung

$$r_{S1} < r_{S2}$$

von Belang.

Die folgende Tabelle stellt die relative Flächenschwerpunktsverlagerung $r_{S2} / r_{S1}$ der relativen axialen Längenzunahme $L_a/L$ gegenüber:

| $L_a/L$ | $r_{S2}/r_{S1}$ |
| --- | --- |
| 1,0 | 1,0000 |
| 1,2 | 1,0056 |
| 1,4 | 1,0102 |
| 1,6 | 1,0141 |
| 1,8 | 1,0175 |
| 2,0 | 1,0204 |
| 2,2 | 1,0230 |
| 2,4 | 1,0252 |
| 2,6 | 1,0272 |
| 2,8 | 1,0290 |
| 3,0 | 1,0306 |

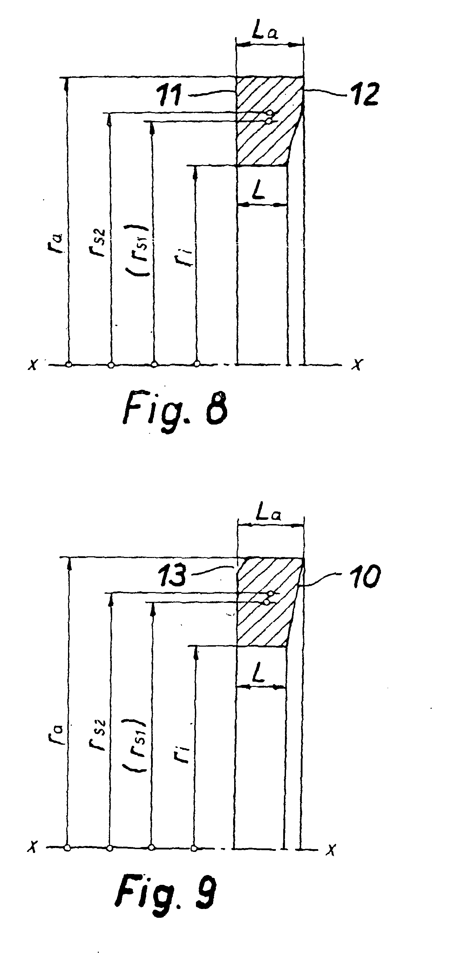

In der Fig. 8 ist der schematisierte Halbschnitt durch einen Schwungring gezeigt, der einerseits von der zapfenseitigen achsnormalen Stirnfläche 11 und andererseits von der beliebig räumlich gekrümmten Stirnfläche 12 begrenzt wird. Die radial innen und radial außen liegenden Zylinderflächen verlaufen konzentrisch zur Achse X - X. Auch hier manifestiert sich die erfinderische Idee durch die Ungleichung

$$r_{S2} > r_{S1}.$$

Bei dem in der Fig. 9 gezeigten Schwungring-Halbschnitt ist dieser zwar durch die Fase 13 an der äußeren Peripherie geschmälert; dennoch gilt erfindungsgemäß nach wie vor die zuvor genannte Ungleichung

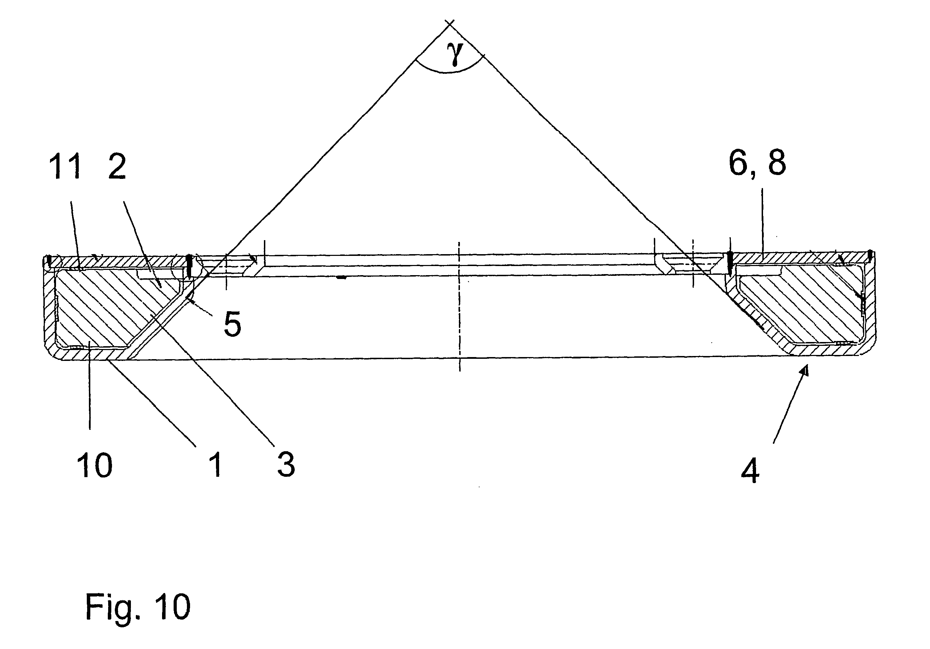

In Figur 10 wird das Gehäuse 1 von einer ringförmigen Gehäuseschale 5, die die Arbeitskammer ausbildet, und einem ebenen, ringscheibenförmigen Deckel 6 gebildet. Der Deckel 6 verschließt das Gehäuse 1 in dem er fluiddicht mit der Gehäuseschale 5 verschweißt ist. Die Gehäuseschale 5 liegt dabei einer axial inneren Stirnfläche 10 und der Deckel 6 der axial äußeren Stirnfläche 11 gegenüber. Die Gehäuseschale 5 folgt dem Verlauf der axial inneren Stirnfläche 10 konturnah unter Beibehaltung eines Scherspaltes 3 mit konstanter Weite. In einem radial inneren Bereich ist die Gehäuseschale 5 konusförmig ausgebildet und bildet einen Konuswinkel $\gamma$ von etwa 90°. Je nach Einbauverhältnissen kann dieser um $\pm$ 45° variieren.

Im Innern der Arbeitskammer ist der Schwungring 2 gelagert. Dessen Halbschnittfläche weist in einem radial inneren Bereich eine zunehmende axiale Länge L auf, um dann in einem radial äußeren Bereich eine konstante Länge L beizubehalten. Mit anderen Worten geht die Halbschnittfläche auf etwa halber radialer Höhe von einer dreieckigen in eine rechteckige Kontur über. Mit dieser Bauweise lassen sich Bauräume im Bereich von Kurbelwangen und Gegengewichten einer Kurbelwelle optimal ausnutzen.

Bezugszeichenliste

| | |
| --- | --- |
| 1 | Gehäuse |
| 2 | Schwungring |
| 3 | Scherspalt |
| 4.1, 4.2, 4.3 | Drehschwingungsdämpfer |
| 5.1, 5.2 | Gehäuseschale |
| 6.1, 6.2 | Deckel |
| 8 | Deckelschale |
| 9 | Befestigungsschraube |
| 10 | axial innen liegende bzw. wangenseitige Stirnfläche |
| 11 | axial außen liegende bzw. zapfenseitige Stirnfläche |
| 12 | räumlich gekrümmte, axial innen liegende bzw. wangenseitige Stirnfläche |
| 13 | Fase |
| 20 | Grundlagerzapfen |
| 21 | Hubzapfen |
| 22 | Kurbelwange |
| 23 | Gegengewicht |

**Patentansprüche**

**1.** Drehschwingungsdämpfer

   • mit einem drehsteif mit einer Maschinenwelle, insbesondere einer Motorwelle, verbindbaren Gehäuse (1), das eine ringförmige Arbeitskammer umschließt,

• mit einem in der Arbeitskammer relativ zum Gehäuse (1) drehbar angeordneten und geführten Schwungring (2),

• mit einem Scherspalt (3) zwischen dem Gehäuse (1) und dem Schwungring (2), der mit einem viskosen Dämpfungsmittel gefüllt ist und wobei

• die axiale Länge L der Halbschnittfläche des Schwungringes (2) zumindest in einem Teilbereich der Halbschnittfläche nach radial außen zunimmt,

**dadurch gekennzeichnet, dass**
eine der axialen Stirnflächen (10, 11, 12) des Schwungringes (2) in etwa achsnormal zur Symmetrieachse X - X des Drehschwingungsdämpfers verläuft.

2. Drehschwingungsdämpfer nach Anspruch 1, **dadurch gekennzeichnet, dass** die axial außen liegende Stirnfläche (11) des Schwungringes (2) in etwa achsnormal zur Symmetrieachse X - X des Drehschwingungsdämpfers verläuft.

3. Drehschwingungsdämpfer nach einem der vorhergehenden Ansprüche **dadurch gekennzeichnet, dass** die axial innen liegende Stirnfläche (10, 12) im Verlauf von radial innen nach radial außen zumindest bereichsweise einen Winkel $\alpha > 0°$ mit der Achsnormalen einschließt.

4. Drehschwingungsdämpfer nach Anspruch 3, **dadurch gekennzeichnet, dass** die axial innen liegende Stirnfläche (10, 12) von radial innen nach radial außen durchgehend einen Winkel $\alpha > 0°$ mit der Achsnormalen einschließt.

5. Drehschwingungsdämpfer nach Anspruch 4, **dadurch gekennzeichnet, dass** der Winkel $\alpha$ der axial innen liegende Stirnfläche (10) von radial innen nach radial außen in etwa konstant ist, so dass die axial innen liegende Stirnfläche (10) eine Kegelmantelfläche bildet.

6. Drehschwingungsdämpfer nach einem der vorhergehenden Ansprüche, **dadurch gekennzeichnet, dass** die Halbschnittfläche des Schwungringes (2) in etwa trapezförmig ausgebildet ist.

7. Drehschwingungsdämpfer nach einem der vorhergehenden Ansprüche, **dadurch gekennzeichnet, dass** die axiale Länge L der Halbschnittfläche des Schwungringes (2) stetig nach radial außen zunimmt.

8. Drehschwingungsdämpfer nach einem der vorhergehenden Ansprüche, **dadurch gekennzeichnet, dass** die Weite des Scherspalts (3) jeweils zwischen dem Gehäuse (1) und den axialen Stirnflächen (10, 11, 12) des Schwungringes (2) im wesentlichen konstant ist.

9. Drehschwingungsdämpfer nach einem der vorhergehenden Ansprüche, **dadurch gekennzeichnet, dass** die Weite des Scherspalts (3) im Bereich zunehmender axiale Länge L der Halbschnittfläche im wesentlichen konstant ist.

10. Drehschwingungsdämpfer nach einem der vorhergehenden Ansprüche, **dadurch gekennzeichnet, dass** das Gehäuse von zwei ringförmigen Gehäuseschalen (5.1, 8) gebildet wird, wovon eine erste Gehäuseschale (5.1) einer axial äußeren Stirnfläche (11) und eine zweite Gehäuseschale (8) der axial inneren Stirnfläche (10) gegenüberliegt.

11. Drehschwingungsdämpfer nach Anspruch 8, **dadurch gekennzeichnet, dass** die zweite Gehäuseschale (8) dem Verlauf der axial inneren Stirnfläche (10) folgend ausgebildet ist.

12. Drehschwingungsdämpfer nach Anspruch 8 oder 9, **dadurch gekennzeichnet, dass** die zweite Gehäuseschale (8) als konusförmige Deckelschale ausgebildet ist.

13. Drehschwingungsdämpfer nach einem der vorhergehenden Ansprüche, **dadurch gekennzeichnet, dass** das Gehäuse (1) von einer ringförmigen Gehäuseschale (5), die die Arbeitskammer ausbildet, und einem ringscheibenförmigen Deckel (6) gebildet wird, wobei der Deckel (6) das Gehäuse (1) verschließt.

14. Kurbelwelle mit einem Drehschwingungsdämpfer nach einem der vorhergehenden Ansprüche, **dadurch gekennzeichnet, dass** die Arbeitskammer in einer axial endständigen Kurbelwange (22) und/ oder dem Gegengewicht (23) einer Kurbelwange (22) ausgebildet ist.

**Claims**

1. A torsional vibration damper

   ■ having a housing (1) which can be connected in a torsion-proof manner to a machine shaft, in particular an engine shaft, and which comprises a ring-shaped operating chamber,
   ■ having an inertia ring (2) which is positioned and mounted in the operating chamber in such a manner that it is able to rotate in relation to the housing (1), and
■ having a shearing gap (3) between the housing (1) and the inertia ring (2) which is filled with a viscous damping medium,
■ the axial length (L) of the half-section plane of the inertia ring (2) increasing radially outwards in at least a partial area of the half-section plane,

**characterised in that**
one of the axial front faces (10, 11, 12) of the inertia ring (2) runs approximately perpendicular to the axis of symmetry X-X of the torsional vibration damper.

2. A torsional vibration damper in accordance with claim 1,
**characterised** i n that
the axially outer front face (11) of the inertia ring (2) runs approximately perpendicular to the axis of symmetry X-X of the torsional vibration damper.

3. A torsional vibration damper in accordance with one of the preceding claims,
**characterised** i n that
the axially inner front face (10, 12) forms an angle $\alpha$ > 0° with the perpendicular along its course from radially inner to radially outer in at least certain areas.

4. A torsional vibration damper in accordance with claim 3,
**characterised in that**
the axially inner front face (10, 12) forms an angle $\alpha$ > 0° with the perpendicular from radially inner to radially outer along its entire length.

5. A torsional vibration damper in accordance with claim 4,
**characterised in that**
the angle $\alpha$ of the axially inner front face (10) is approximately constant from radially inner to radially outer and the axially inner front face (10) therefore forms the envelope of a cone.

6. A torsional vibration damper in accordance with one of the preceding claims,
**characterised in that**
the half-section plane of the inertia ring (2) is approximately trapezoidal in shape.

7. A torsional vibration damper in accordance with one of the preceding claims,
**characterised in that**
the axial length (L) of the half-section plane of the inertia ring (2) increases constantly radially outwards.

8. A torsional vibration damper in accordance with one of the preceding claims,
**characterised in that**

the width of the shearing gap (3) is essentially constant between the housing (1) and the axial front faces (10, 11, 12) of the inertia ring (2).

9. A torsional vibration damper in accordance with one of the preceding claims,
**characterised in that**
the width of the shearing gap (3) is essentially constant in the area of increasing axial length (L) of the half-section plane.

10. A torsional vibration damper in accordance with one of the preceding claims,
**characterised in that**
the housing is made up of by two ring-shaped housing shells (5.1, 8), a first housing shell (5.1) being located opposite an axially outer front face (11) and a second housing shell (8) being located opposite the axially inner front face (10).

11. A torsional vibration damper in accordance with claim 8,
**characterised in that**
the second housing shell (8) is designed to follow the course of the axially inner front face (10).

12. A torsional vibration damper in accordance with claim 8 or 9,
**characterised in that**
the second housing shell (8) is designed as a conical covering shell.

13. A torsional vibration damper in accordance with one of the preceding claims,
**characterised in that**
the housing (1) is made up of a ring-shaped housing shell (5) which forms the operating chamber and a washer-shaped cover (6), the cover (6) closing the housing (1).

14. A crank shaft having a torsional vibration damper in accordance with one of the preceding claims,
**characterised in that**
the operating chamber is formed in an axially terminal crank web (22) and/ or the counter weight (23) of a crank web (22).

**Revendications**

1. Amortisseur de vibrations torsionnelles

- comportant un boîtier (1) qui peut être relié sans pouvoir tourner à un arbre de machine, en particulier à un arbre de moteur, et qui entoure une chambre de travail annulaire,
- un volant (2) guidé et monté tournant dans la chambre de travail par rapport au boîtier (1),

- un intervalle de cisaillement (3) situé entre le boîtier (1) et le volant (2) et rempli d'un agent d'amortissement visqueux,

- dans lequel la longueur axiale L de la surface de demi-section du volant (2) augmente radialement vers l'extérieur au moins dans une partie de la surface de demi-section,

**caractérisé en ce qu'**une des surfaces frontales axiales (10, 11, 12) du volant (2) s'étend à peu près à la normale de l'axe de symétrie X - X de l'amortisseur de vibrations torsionnelles.

2. Amortisseur de vibrations torsionnelles selon la revendication 1, **caractérisé en ce que** la surface frontale axiale (11) extérieure du volant (2) s'étend à peu près à la normale de l'axe de symétrie X - X de l'amortisseur de vibrations torsionnelles.

3. Amortisseur de vibrations torsionnelles selon l'une des revendications précédentes, **caractérisé en ce que** la surface frontale axiale (10, 12) intérieure fait, au moins à certains endroits, un angle $\alpha > 0°$ avec la normale de l'axe en passant de son tracé radial intérieur à son tracé radial extérieur.

4. Avertisseur de vibrations torsionnelles selon la revendication 3, **caractérisé en ce que** la surface frontale axiale (10, 12) intérieure fait constamment un angle $\alpha > 0°$ avec la normale de l'axe en passant de son tracé radial intérieur à son tracé radial extérieur.

5. Amortisseur de vibrations torsionnelles selon la revendication 4, **caractérisé en ce que**, en passant de son tracé radial intérieur à son tracé radial extérieur, l'angle $\alpha$ de la surface frontale axiale (10) intérieure est à peu près constant, de sorte que la surface frontale axiale (10) intérieure forme une surface latérale conique.

6. Amortisseur de vibrations torsionnelles selon l'une des revendications précédentes, **caractérisé en ce que** le volant (2) a une surface de demi-section à peu près trapézoïdale.

7. Amortisseur de vibrations torsionnelles selon l'une des revendications précédentes, **caractérisé en ce que** la surface de demi-section du volant (2) a une longueur axiale L qui augmente en continu radialement vers l'extérieur.

8. Amortisseur de vibrations torsionnelles selon l'une des revendications précédentes, **caractérisé en ce que** l'intervalle de cisaillement (3) a une largeur pratiquement constante entre le boîtier (1) et les surfaces frontales axiales (10, 11, 12) du volant (2) respectivement.

9. Amortisseur de vibrations torsionnelles selon l'une des revendications précédentes, **caractérisé en ce que** l'intervalle de cisaillement (3) a une largeur pratiquement constante dans la zone où la longueur axiale L de la surface de demi-section augmente.

10. Amortisseur de vibrations torsionnelles selon l'une des revendications précédentes, **caractérisé en ce que** le boîtier est formé de deux coques (5.1, 8) annulaires dont la première coque de boîtier (5.1) est en face d'une surface frontale axiale (11) extérieure et la deuxième coque de boîtier (8) en face de la surface frontale axiale (10) intérieure.

11. Amortisseur de vibrations torsionnelles selon la revendication 8, **caractérisé en ce que** la deuxième coque de boîtier (8) est formée en suivant le tracé de la surface frontale axiale (10) intérieure.

12. Amortisseur de vibrations torsionnelles selon la revendication 8 ou 9, **caractérisé en ce que** la deuxième coque de boîtier (8) est une coque de couvercle conique.

13. Amortisseur de vibrations torsionnelles selon l'une des revendications précédentes, **caractérisé en ce que** le boîtier (1) est formé d'une coque de boîtier (5) annulaire qui constitue la chambre de travail et d'un couvercle (6) en forme de disque annulaire, le couvercle (6) fermant le boîtier (1).

14. Vilebrequin comportant un amortisseur de vibrations torsionnelles selon l'une des revendications précédentes, **caractérisé en ce que** la chambre de travail est formée dans un carter de vilebrequin (22) situé à l'extrémité axiale et/ou dans le contrepoids (23) d'un carter de vilebrequin (22).

# Fig.1

# Fig. 2

5.1

4.1

2

8

3

9

23

20

22

21

11

10

1

α

L_a

L

Fig 3

5.2

4.2

6.1

2

Fig. 4

23

4.3

2

3

6.2

22

11

10

**Fig.5**

**Fig. 6**

**Fig. 7**

Fig. 8

Fig. 9

Fig. 10